# EUROPEAN PATENT SPECIFICATION

(11) **EP 0 714 958 B1**
(45) Date of publication and mention of the grant of the patent: **27.10.1999**
(21) Application number: 95118276.5
(22) Date of filing: 21.11.1995
(51) Int. Cl.: C09D 7/00, C09D 5/02

(54) **Method for producing fluid powder slurry coating compositions**
Verfahren zur Herstellung von Überzugsmassen auf Basis einer fliessfähigen Pulveraufschlämmung
Procédé de préparation de compositions de revêtement à base de suspension fluide de poudre

(30) Priority: 28.11.1994 US 345087
(43) Date of publication of application: 05.06.1996
(73) Proprietor: BASF CORPORATION, Mount Olive, New Jersey 07828-1234 (US)
(72) Inventor: Williams, Charles F., Grand Haven, Michigan 49417 (US)
(74) Representative: Münch, Volker, Dr.

(56) References cited:
- EP-A- 0 161 757
- EP-A- 0 516 066
- CH-A- 446 720
- GB-A- 986 613
- GB-A- 1 491 136
- GB-A- 1 521 354
- US-A- 4 476 271

## Description

### Background of the Invention

The present invention relates to powder slurry coating compositions. More particularly, the present invention relates to a method for reducing foaming in powder slurry coating compositions, to form smooth, fluid powder slurry coating compositions.

Particular interest exists in the use of powder slurry coating compositions for automotive applications. These coatings are desirable because such slurries utilize powder coatings to provide the good application properties of liquid coatings with a much lower VOC content. The industry desires coatings with lowered VOC content to meet environmental regulations. Currently, various powder base and clear coat compositions are being developed for use as powder slurry coatings for automotive application.

A problem often encountered in formulating powder slurry coating compositions, is the foaming of the powder slurry that results when the powder coating is combined with water to form the slurry. Causes of foaming were associated with the method of forming the polymeric resin or resins used in the slurry, the formulation of the polymeric resin used in the slurry, or the powder particle size of the powder coating used in the slurry. It is thought that foaming is causally related to hydrogen bonding between water and the resin used in the powder coating. Certain resin formulations tend to result in greater hydrogen bonding. For example, one acrylic resin containing hydroxyl functionality, with no acid functionality resulted in slurries that foamed, while an acrylic resin identical except for the inclusion of acid functionality did not foam.

The foam can not be removed by vacuum or other mechanical means. Attempts to remove foam formation by vacuum result in worsening the foam formation. Also, the use of defoamers does not reduce foaming.

The document EP-A-0516066 discloses powder slurries comprising acids. For defoaming conventional defoamers are added.

Accordingly, the present invention is directed to a method for forming smooth powder slurry coating formulations by reducing or eliminating foam formation in the slurry compositions.

### Summary and Detailed Description of the Invention

The present invention is a method for greatly reducing or eliminating foam formation in powder slurry coating compositions. The method includes the steps of first forming a powder slurry coating composition, followed by the addition of a water soluble compound having acid functionality being selected from the group consisting of thickeners, dispersants and wetting agents to the powder slurry coating composition in an amount sufficient to maintain a pH of between 4 and 7.

Before forming the powder slurry composition the powder coating composition may be reduced to an average particle size of between 3 and 5µm, with a maximum particle size of 10µm. The step of forming a powder slurry coating composition may include adding to water a powder coating composition containing acid functional resin selected from the group consisting of resins obtained by emulsion polymerization and resins obtained by suspension polymerization. An embodiment of the invention includes the step of forming a powder slurry coating composition comprising the addition to water of non ionic surfactant as the only surfactant. The step of forming a powder slurry composition may include adding a powder coating composition containing a water soluble acid functional resin.

The powder slurry is formed by combining a powder coating composition with water and surfactant. The powder coating composition may include any suitable polymeric resin. These resins include but are not limited to acrylic resins, epoxy resins, amine modified resins, phenolic resins, saturated and unsaturated polyester resins, urea resins, urethane resins, blocked isocyanate resins and mixtures thereof. For purposes of the present invention, the method for foam reduction was particularly useful for slurry coatings containing acrylic copolymer resins having a reactive functionality which is hydroxyl, carboxyl, isocyanate, epoxy, amine or acid anhydride or a mixture thereof.

Also preferred are compositions comprising an acrylic copolymer containing 0.5 to 50 % by weight of glycidyl group containing monomer and at least one member selected from the group consisting of dibasic acids, polybasic acids and acid anhydrides.

Also preferred for purposes of the present invention are carboxyl functional polyester resins.

To form a powder slurry, the powder coating is prepared from resins prepared from the above described copolymers and extruded as a sheet. The sheet is cooled and then run through a kibbler to produce flakes of the coating. The flake is milled to the desired powder size by any suitable means known in the art including hammer milling, air classifying (ACM) milling, or jet milling as taught in U.S. patent application Serial Number 08/149,425, filed November 9, 1993. In one embodiment, a powder coating having an average particle size of between 3 and 5 µm [microns], with a maximum particle size of 10 µm [microns] is included in the powder slurry.

In the method of the present invention, the powder coating composition is added in an amount up to 40% by weight, generally in an amount between 5.0 % and 40.0 % by weight, based on total coating composition weight.

A slurry is formed from the milled powder coating by combining the powder, surfactant and water. Surfactant is added to reduce the surface tension of the water and provide optimum particle wetting. An example of a suitable surfactant is Tergitol® TMN-6, from Union Carbide, New York, New York. The surfactant is preferably included in an amount between 0.05 and 4.0% by weight based on total slurry coating weight.

Following the addition of the powder coating to water, dispersants are added to keep the wetted powder from agglomerating. Suitable dispersants include anionic acrylic polymeric dispersing agents such as Tamol® 731 or Tamol® 850 (trademark of Rohm and Haas of Philadelphia, Pennsylvania). The dispersant is added in an amount between 0.5 and 10.0 % by weight, based on total slurry coating weight.

Foam formation usually results at this stage of preparation of the powder slurry, when the above ingredients are subjected to mixing. The addition of defoamers does not effectively reduce all foam formation. Defoamers generally reduce foaming by up to about 50 percent. Other attempts at minimizing foam formation, such as application of a vacuum result in increased foam formation.

The water soluble compound having acid functionality is added, resulting in the elimination of most or all of the foam. Suitable water soluble compounds having acid functionality include anionic surfactants, thickeners, rheology control agents and dispersants having acid functionality. In a preferred embodiment the water soluble compound having acid functionality is supplied by an acid functional thickener such as Acrysol® ASE-60 from Rohm and Haas. The water soluble compound having acid functionality is added in an amount sufficient to achieve a pH in the slurry composition of between 4 and 7. Preferably the compound having acid functionality is added in an amount between 0.5 and 5.0 percent by weight, based on total slurry composition weight.

When the water soluble compound with acid functionality is added to the coating composition, it is necessary to use nonionic thickener, as a cationic thickener requires the addition of amine to facilitate thickening. In the case of the present invention, the addition of amine is detrimental as this causes the slurry mixture to coagulate.

It is hypothesized that foaming of the slurry is reduced by the addition of an acid to the slurry, as the acid ions interact with the hydroxyl groups on the resin to disrupt hydrogen bonding between the resin and water.

The method of the present invention may also include the addition of other suitable additives to the slurry coating composition. These additives include additional rheology control agents, dispersants, thickeners, and wetting agents.

The present invention is further illustrated by the following non-limiting examples.

### Examples

### Examples 1A-1D

### Preparation of Acrylic Powder slurry With Acid Additive

Coating compositions 1A-1D were prepared from ingredients and in amounts set forth below. All amounts are in percent by weight based on total slurry coating composition weight.

| Formulation | A | B | C | D |
|---|---|---|---|---|
| Deionized Water | 57.80 | 58.0 | 56.0 | 57.50 |
| Hydroxyl Functional Acrylic Powder Coating¹ | 38.68 | 39.0 | 37.0 | 38.18 |
| Dispersant² | 1.14 | 2.1 | 0.77 | 0.50 |
| Surfactant³ | 0.52 | 0.3 | 0.31 | 0.10 |
| acid functional thickener⁴ | 1.00 | 1.03 | 2.1 | 2.5 |
| Defoamer⁵ | 0.60 | 0.33 | 0.20 | --- |
| Diethyl Ethanolamine | 0.94 | 0.78 | --- | --- |
| Nonionic thickener | --- | --- | 2.7 | 1.22 |
| Propylene glycol | --- | --- | 0.5 | --- |

| | | | | |
|---|---|---|---|---|
| ¹ Joncryl 587, Acrylic without acid functionality from S. C. Johnson and Son, Racine, Wisconsin 53403. | | | | |
| ² Tamol® 731 from Rohm and Haas, Philadelphia, Pa. 19105. | | | | |
| ³Tergitol® TMN-6 from Union Carbide, New York, N. Y. | | | | |
| ⁴ Acrysol ® ASE-60, having a pH of about 3.5, from Rohm and Haas, Philadelphia, Pa. 19105. | | | | |
| 5 Defoamer | | | | |

### Example 1A

Water and surfactant were combined. Powder coating having an average particle size between 3 and 5 µm [microns] and a maximum particle size of 10 µm [microns], was then added to the water in two stages. Dispersant was then added to the mixture. The mixture demonstrated foaming. Acid functional thickener was added, reducing foaming. Diethyl ethanolamine was added, and following the addition the mixture exhibited foaming and was thick and puffy. Foam was not adequately reduced by defoamer. Vacuum increased foaming.

### Example 1B

The ingredients were combined as in Ex. 1A, with acid functional thickener being added to the mixture. The result was a smooth mixture. Amine was added after addition of the thickener. Following addition of amine, puffiness increased.

### Example 1C

The ingredients were combined as set-forth in 1A. A nonionic thickener was used in the system. No amine was added. Acid functional thickener was added to reduce foaming until a smooth, fluid mixture was obtained. No coagulation resulted.

### Example 1D

Mixture exhibited foaming after slurry formation. Addition of ASE-60 had the desired effect of foam reduction.

## Claims

1. A method for reducing foam in powder slurry compositions, comprising the steps of
a) forming a powder slurry coating composition and
b) adding a water soluble acid functional compound selected from the group consisting of thickeners, dispersants and wetting agents to the powder slurry coating composition in an amount sufficient to maintain a pH of between 4 and 7.

2. The method of claim 1, further comprising the step of reducing a powder coating composition to an average particle size of between 3 and 5µm [microns], with a maximum particle size of 10µm [microns], before forming the powder slurry composition.

3. The method of claim 1, wherein the step of forming a powder slurry coating composition includes adding to water, a powder coating composition containing an acid functional resin selected from the group consisting of resins obtained by emulsion polymerization and resins obtained by suspension polymerization.

4. The method of claim 3, wherein the step of forming a powder slurry coating composition includes the addition to water of nonionic surfactant as the only surfactant.

5. The method of claim 1, wherein the step of forming a powder slurry coating composition includes adding a powder coating composition containing a water soluble, acid functional resin.

6. The method of claim 1, further comprising the step of adding to the powder slurry coating composition, at least one additive selected from the group consisting of rheology control agents, dispersants, thickeners, and wetting agents.

7. The method of claim 1, wherein the compound having acid functionality is added in an amount between 0.5 and 5.0 percent by weight, based on total slurry composition weight.

8. The method of claim 1, wherein the powder coating composition is added in an amount up to 40% by weight, based on total coating composition weight.

9. The method of claim 1, wherein the powder slurry coating composition is formed by combining surfactant, water and powder coating composition, and wherein the surfactant is added in an amount between 0.05 and 4.0 % by weight, based on total slurry composition weight.

## Patentansprüche

1. Verfahren zur Verminderung des Schäumens bei Pulverslurry-Zusammensetzungen, bei dem man:
a) eine Pulverslurry-Lackzusammensetzung herstellt,
b) der Pulverslurry-Lackzusammensetzung eine wasserlösliche säurefunktionelle Verbindung aus der Gruppe bestehend aus Verdickern, Dispergiermitteln und Netzmitteln in einer zur Aufrechterhaltung eines pH-Werts von 4 bis 7 ausreichenden Menge zusetzt.

2. Verfahren nach Anspruch 1, bei dem man außerdem eine Pulverlackzusammensetzung vor der Herstellung der Pulverslurry-Zusammensetzung auf eine durchschnittliche Teilchengröße von 3 bis 5 µm [Mikron] bei einer maximalen Teilchengröße von 10 µm [Mikron] zerkleinert.

3. Verfahren nach Anspruch 1, bei dem man bei der Herstellung einer Pulverslurry-Lackzusammensetzung eine Pulverlackzusammensetzung mit einem säurefunktionellen Harz aus der Gruppe bestehend aus Harzen, die durch Emulsionspolymerisation erhalten werden, und Harzen, die durch Suspensionspolymerisation erhalten werden, in Wasser gibt.

4. Verfahren nach Anspruch 3, bei dem man bei der Herstellung einer Pulverslurry-Lackzusammensetzung als einzige oberflächenaktive Substanz eine nichtionische oberflächenaktive Substanz in Wasser gibt.

5. Verfahren nach Anspruch 1, bei dem man bei der Herstellung einer Pulverslurry-Lackzusammensetzung eine Pulverlackzusammensetzung mit einem wasserlöslichen, säurefunktionellen Harz zusetzt.

6. Verfahren nach Anspruch 1, bei dem man außerdem der Pulverslurry-Lackzusammensetzung mindestens ein Additiv aus der Gruppe bestehend aus rheologiesteuernden Mitteln, Dispergiermitteln, Verdickern und Netzmitteln zusetzt.

7. Verfahren nach Anspruch 1, bei dem man die Verbindung mit Säurefunktionalität in einer Menge von 0,5 bis 5,0 Gewichtsprozent, bezogen auf das Gesamtgewicht der Slurry-Zusammensetzung, einsetzt.

8. Verfahren nach Anspruch 1, bei dem man die Pulverlackzusammensetzung in einer Menge von bis zu 40 Gew.-%, bezogen auf das Gesamtgewicht der Lackzusammensetzung, einsetzt.

9. Verfahren nach Anspruch 1, bei dem man die Pulverslurry-Lackzusammensetzung dadurch herstellt, daß man oberflächenaktive Substanz, Wasser und Pulverlackzusammensetzung vereinigt und die oberflächenaktive Substanz in einer Menge von 0,05 bis 4 Gew.-%, bezogen auf das Gesamtgewicht der Slurry-Zusammensetzung, zusetzt.

## Revendications

1. Procédé de réduction de la mousse dans des compositions en bouillie de poudre, comprenant les étapes consistant à
a) former une composition de revêtement en bouillie de poudre et
b) ajouter un composé hydrosoluble à fonction acide choisi parmi le groupe constitué d'épaississants, de dispersants et d'agents mouillants, à la composition de revêtement en bouillie de poudre en une quantité suffisante pour maintenir un pH compris entre 4 et 7.

2. Procédé selon la revendication 1, comprenant en outre l'étape consistant à réduire une composition de revêtement en poudre à une granulométrie moyenne comprise entre 3 et 5 µm [microns], avec une granulométrie maximale de 10 µm [microns], avant de former la composition en bouillie de poudre.

3. Procédé selon la revendication 1, dans lequel l'étape de formation d'une composition de revêtement en bouillie de poudre comprend l'addition à de l'eau d'une composition de revêtement en poudre contenant une résine à fonction acide choisie parmi le groupe constitué de résines obtenues par polymérisation en émulsion et de résines obtenues par polymérisation en suspension.

4. Procédé selon la revendication 3, dans lequel l'étape de formation d'une composition de revêtement en bouillie de poudre comprend l'addition à de l'eau d'un tensio-actif non ionique en tant qu'unique tensio-actif.

5. Procédé selon la revendication 1, dans lequel l'étape de formation d'une composition de revêtement en bouillie de poudre comprend l'addition d'une composition de revêtement en poudre contenant une résine hydrosoluble à fonction acide.

6. Procédé selon la revendication 1, comprenant en outre l'étape d'addition à la composition de revêtement en bouillie de poudre d'au moins un additif choisi parmi le groupe constitué d'agents régulant la rhéologie, de dispersants, d'épaississants et d'agents mouillants.

7. Procédé selon la revendication 1, dans lequel le composé ayant une fonctionnalité acide est ajouté en une quantité comprise entre 0,5 et 5,0 pour cent en poids, par rapport au poids total de la composition en bouillie.

8. Procédé selon la revendication 1, dans lequel la composition de revêtement en poudre est ajoutée en une quantité allant jusqu'à 40% en poids, par rapport au poids total de la composition de revêtement.

9. Procédé selon la revendication 1, dans lequel la composition de revêtement en bouillie de poudre est formée en combinant un tensio-actif, de l'eau et une composition de revêtement en poudre, et dans lequel le tensio-actif est ajouté en une quantité comprise entre 0,05 et 4,0% en poids, par rapport au poids total de la composition en bouillie.
